# EUROPÄISCHE PATENTSCHRIFT

(11) **EP 3 615 418 B1**
(45) Veröffentlichungstag und Bekanntmachung des Hinweises auf die Patenterteilung: **02.10.2024**
(21) Anmeldenummer: 18729037.4
(22) Anmeldetag: 24.04.2018
(51) Int. Cl.: B63H 9/00, B63H 9/02

(54) **VERFAHREN ZUM BESTIMMEN EINES OPTIMALEN ANTRIEBSPARAMETERS UND/ODER EINER LEISTUNGSEINSPARUNG EINES WINDANTRIEBES, VERFAHREN ZUM DARSTELLEN DER BESTIMMTEN LEISTUNGSEINSPARUNG, AUTOMATISCHES STEUERUNGSSYSTEM FÜR EINEN WINDANTRIEB, WINDANTRIEB UND SCHIFF**
METHOD FOR DETERMINING AN OPTIMAL PROPULSION PARAMETER AND/OR A POWER SAVING OF A WIND PROPULSION SYSTEM, METHOD FOR PROVIDING THE DETERMINED POWER SAVING, AUTOMATIC CONTROL SYSTEM FOR A WIND PROPULSION SYSTEM, WIND PROPULSION SYSTEM, AND SHIP
PROCÉDÉ DE DÉTERMINATION D'UN PARAMÈTRE D'ENTRAÎNEMENT OPTIMAL ET/OU D'UNE ÉCONOMIE DE PUISSANCE D'UNE PROPULSION ÉOLIENNE, PROCÉDÉ DE REPRÉSENTATION DE L'ÉCONOMIE DE PUISSANCE DÉTERMINÉE, SYSTÈME DE COMMANDE AUTOMATIQUE POUR UNE PROPULSION ÉOLIENNE, PROPULSION ÉOLIENNE ET NAVIRE

(30) Priorität: 27.04.2017 DE 102017109115
(43) Veröffentlichungstag der Anmeldung: 04.03.2020
(73) Patentinhaber: Hochschule Emden/Leer, 26723 Emden (DE)
(72) Erfinder: VAHS, Michael, 21640 Bliedersdorf (DE); GÖTTING, Moritz, 26725 Emden (DE); MÜLLER, Marcel, 33813 Oerlinghausen (DE)
(74) Vertreter: Weidner Stern Jeschke
(86) Internationale Anmeldenummer: PCT/DE2018/200038
(87) Internationale Veröffentlichungsnummer: WO 2018/196929

(56) Entgegenhaltungen:
- WO-A2-2006/133950
- WO-A2-2012/178006
- WO-A2-2012/178006
- DE-A1- 102006 025 732
- FI-B- 126 441
- GB-A- 2 514 855
- BROOKES AND GATEHOUSE LTD: "B&G Hercules 2000 user manual", 5 February 2003 (2003-02-05), XP055824090, Retrieved from the Internet <URL:https://manuals.bandg.com/discontinued/hs2000_User_Manual.pdf> [retrieved on 20210714]
- TRAUT MICHAEL ET AL: "Propulsive power contribution of a kite and a Flettner rotor on selected shipping routes", APPLIED ENERGY, vol. 113, 16 August 2013 (2013-08-16), pages 362 - 372, XP028762930, ISSN: 0306-2619, DOI: 10.1016/J.APENERGY.2013.07.026

## Beschreibung

Die Erfindung betrifft ein Verfahren zum Bestimmen eines optimalen Antriebsparameters und/oder einer Leistungseinsparung eines Windantriebes eines Schiffes mittels einer Datenverarbeitungsvorrichtung mit einer echtzeitfähigen Schnittstelle zu mindestens einem zugeordneten Messgerät eines Schiffes, wobei mittels des Messgerätes oder der Messgeräte ein Windparameter oder mehrere Windparameter und/oder ein Schiffsparameter oder mehrere Schiffsparameter erfasst wird oder werden. Des Weiteren betrifft die Erfindung ein Verfahren zum Darstellen der bestimmten Leistungseinsparung eines Windantriebes für eine Kursänderung, ein automatisches Steuerungssystem für einen Windantrieb, einen Windantrieb und ein Schiff.

Aus Gründen der Energieeinsparung und des Umweltschutzes werden Windantriebe als Haupt- und/oder Zusatzantrieb an Bord von Schiffen eingesetzt. Aufgrund der starken Abhängigkeit eines Windantriebs von den umgebenden Windbedingungen, sind eine optimale Einstellung von Betriebs- und/oder Leistungsparametern und eine optimale Steuerung des Windantriebes erforderlich.

Als Windzusatzantrieb wird beispielsweise ein Flettner-Rotor eingesetzt. Für einen Flettner-Rotor ist die Bestimmung und Darstellung von Leistungsparametern in einer Polardarstellung bekannt, wobei die vom Flettner-Rotor gelieferte Leistung jedoch nur für feste Wind- und Schiffsgeschwindigkeiten angegeben wird und somit nicht zur Steuerung unter Realbedingungen verwendbar ist. Zudem erfolgt die Angabe der Leistung üblicherweise als prozentualer Anteil.

Beispielsweise beschreibt die US 2014/0196648 A1 sowie die korrespondierende WO 2012/178 006 A2 ein mechanisches Segelsystem mit einem Segelzylinder, bei dem in einer Datenverarbeitungsanlage mittels eines Algorithmus die optimale Rotationsgeschwindigkeit des Segelzylinders für eine vorgegebene Windgeschwindigkeit und Schiffsgeschwindigkeit errechnet wird. Hierbei kann die Segeleffizienz des Segelsystems in Prozent für einen vorgegebenen Windwinkel auf einem Kontrollmonitor angezeigt werden, wobei eine Polare eine Richtung auf dem Monitor als Faktor des Schiffssteuerkurses in Bezug zur scheinbaren Windrichtung annimmt. Zudem kann vom Kontrollmonitor auf ein externes Wetterroutensystem nach dem Stand der Technik zugegriffen werden, welches eine Langzeitprognose als Entscheidungshilfe für die Navigation liefert.

Die WO 2006/133950 A2 offenbart ein Schiff mit einer Vielzahl von Magnus-Rotoren, bei dem die Steuerung der Drehzahl und/oder der Drehrichtung jedes elektrischen Motors eines Magnus-Rotors basierend auf aktuellen Windmessungen erfolgt. Auch in der FI 126441 B wird ein Verfahren zum Dämpfen von Bewegungen eines Schiffes unter Verwendung von Magnus-Rotoren beschrieben, bei dem ebenfalls ein Bestimmen der relativen Windrichtung und der relativen Windgeschwindigkeit und somit der scheinbaren Windparameter erfolgt.

In LELE, A. und RAO, K. V. S. (Net power generated by flettner rotor for different values of wind speed and ship speed, In: Circuit, Power and Computing Technologies (ICCPCT), 2017 International Conference on circuits power and Computing Technologies [ICCPCTJ. IEEE, 2017. S. 1-6) werden Berechnungen der Leistungsabgabe eines Flettnerrotors für variierte wahre Windgeschwindigkeiten von 5 m/s, 10 m/s, 15 m/s und 20 m/s bei einer festen Schiffsgeschwindigkeit von 15 Knoten und angenommenen konstanten Koeffizienten für Zug- und Schubkraft sowie Rotation dargestellt. Ebenso wird in TRAUT, M. et al. (Propulsive power contribution of a kite and a Flettner rotor on selected shipping routes. Applied Energy, 2013, 113. Jg., S. 362-372) die Leistung eines Flettnerrotors als Funktion des wahren Windwinkels für zwei vorgegebene Schiffsgeschwindigkeiten und fünf vorgegebenen wahre Windgeschwindigkeiten berechnet.

In dem Bedienhandbuch Brookes And Gatehouse Ltd: "B&G Hercules 2000 user manual" (5. Februar 2003, XP055824090) wird ein Racing Instrument Systems mit zwei Prozessoren beschrieben, welche Rohdaten von Sensoren in eine Reihe von Renngewinnfunktionen integrieren. Eine Polare basiert auf Vorhersagedaten oder vorgegebenen Daten, welche in einer Polartabelle abgelegt sind, und ist auf Basis einer eigenen Winddefinition erstellt, da der wahre Wind unüblicherweise als Wind relativ zum Wasser referenziert ist. Gemäß der Anwendung auf Rennyachten kann mittels der Polare die optimale Bootsgeschwindigkeit angezeigt werden.

Bei bekannten Bestimmungs- und Darstellungsverfahren und automatischen Steuerungssystemen für Windantriebe ist nachteilig, dass diese nur auf fest vorgegebenen, simulierten oder im Nachhinein ausgewerteten Wind- und Schiffsparametern beruhen. Dadurch können diese Verfahren und Steuerungssysteme nicht zur Bestimmung und Vorhersage von Leistungsparametern und des optimalen Schiffskurses unter den aktuellen Wind- und/oder Schiffsbedingungen in Echtzeit verwendet werden. Aufgrund der üblichen statisch generierten Darstellung der Leistung eines Windantriebs bei festgelegten Wind- und/oder Schiffsgeschwindigkeiten ist diese Darstellung an Bord eines Schiffes nicht zum Ansteuern eines aktuellen, optimalen Kurses des Schiffes verwendbar.

Aufgabe der Erfindung ist es, den Stand der Technik zu verbessern.

Gelöst wird die Aufgabe durch ein Verfahren zum Bestimmen eines optimalen Antriebsparameters und einer maximalen Leistungseinsparung eines Windantriebes eines Schiffes mittels einer Datenverarbeitungsvorrichtung mit einer echtzeitfähigen Schnittstelle zu mindestens einem zugeordneten Messgerät des Schiffes, wobei mittels des Messgerätes oder der Messgeräte ein Windparameter oder mehrere Windparameter und ein Schiffsparameter oder mehrere Schiffsparameter erfasst werden, mit folgenden Schritten:
- Übertragen von an Bord erfassten Daten des zugeordneten Messgerätes oder der zugeordneten Messgeräte über die echtzeitfähige Schnittstelle zu der Datenverarbeitungsvorrichtung,
- Bestimmen des optimalen Antriebsparameters und der maximalen Leistungseinsparung des Windantriebes mittels der Datenverarbeitungsvorrichtung aus den übertragenen Daten durch
   o Bestimmen eines derzeitigen wahren Windwinkels und einer derzeitigen wahren Windgeschwindigkeit, wobei der derzeitige wahre Windwinkel ein aktuell vorliegender wahrer Windwinkel und der wahre Windwinkel ein Winkel zwischen einem meteorologischen Wind und einer Kiellinie des Schiffes ist und wobei die derzeitige wahre Windgeschwindigkeit eine aktuell vorliegende wahre Windgeschwindigkeit und die wahre Windgeschwindigkeit eine Windgeschwindigkeit des meteorologischen Windes ist,
   o Bestimmen des optimalen Antriebsparameters, wobei der Antriebsparameter ein Betriebsparameter und/oder ein Leistungsparameter des Windantriebes ist, für eine maximale Leistungseinsparung unter Verwenden eines scheinbaren Windwinkels, einer scheinbaren Windgeschwindigkeit und des Schiffsparameters oder mehrerer Schiffsparameter,
   o Festlegen von wahren Windwinkeln in einem Winkelbereich von 0 bis 360 Grad,
   o Bestimmen des scheinbaren Windwinkels und/oder der scheinbaren Windgeschwindigkeit für jeden festgelegten wahren Windwinkel in dem Winkelbereich von 0 bis 360 Grad unter Verwenden der bestimmten derzeitigen wahren Windgeschwindigkeit, und
   o Bestimmen des optimalen Antriebsparameters und der maximalen Leistungseinsparung für jeden festgelegten wahren Windwinkel wie zuvor beschrieben in dem Winkelbereich von 0 bis 360 Grad,
sodass der optimale Antriebsparameter und die maximale Leistungseinsparung für jeden festgelegten wahren Windwinkel vorliegen, anhand deren ein optimaler Kurs des Schiffes in Echtzeit einstellbar ist, wobei das Verfahren eine Zykluszeit von kleiner gleich 5 Sekunden aufweist, sodass das Bestimmen des optimalen Antriebsparameters und der maximalen Leistungseinsparung dynamisch in Abhängigkeit von sich ändernden Wind- und/oder Schiffsparametern in Echtzeit durchgeführt wird.

Durch Bestimmen mindestens eines optimalen Antriebsparameters und/oder der maximalen Leistungseinsparung des Windantriebes wird bei Verwenden des Windantriebs als Hauptantrieb der optimale Kurs am Wind eingestellt und bei Verwenden des Windantriebes als Zusatzantrieb zusätzlich der Energieverbrauch des Schiffes gesenkt.

Es ist besonders vorteilhaft, dass dadurch ein aktuelles Bestimmen und Vorhersagen des optimalen Schiffskurses gerade bei sich ändernden Wind- und/oder Schiffsbedingungen möglich ist. Durch Bestimmen und/oder Darstellen der optimalen Leistungseinsparung des bestehenden Schiffshauptantriebes (Schiffshauptmaschine) durch den Zusatzwindantrieb ist in Echtzeit direkt erkennbar, ob durch eine Kursänderung eine weitere, verbesserte Leistungseinsparung erzielt werden kann. Somit wird eine optimale Steuerung des Windantriebes zur Maximierung der Energieeinsparung auf Basis von im Schiffsbetrieb erfassten Daten und bestimmten Antriebs- und/oder Leistungsparametern in Echtzeit ermöglicht.

Folglich kann in Echtzeit auf einen drehenden Wind durch eine entsprechende Kursänderung auf Basis der zu erwartenden Änderung der Leistung des Windantriebes reagiert werden.

Neben der Steuerung eines Schiffes in Echtzeit ist das erfindungsgemäße Verfahren auch allgemein zur Routenplanung und/oder -optimierung einsetzbar.

Ein wesentlicher Gedanke der Erfindung beruht darauf, dass aus an Bord erfassten Daten zu Wind- und/oder Schiffsbedingungen ein optimaler Antriebsparameter und/oder eine maximale Leistungseinsparung in Abhängigkeit von möglichen Windwinkeln und somit eines 360-Grad-Kurses bestimmt und/oder dargestellt wird und folglich für eine Kursänderung aufgrund von aktuellen Wind- und/oder Schiffsänderungen im Hinblick auf eine maximale Leistungseinsparung des Schiffs in Echtzeit verwendet werden.

### Folgendes Begriffliche sei erläutert:

Ein "Antriebsparameter" ist insbesondere ein Parameter eines Windantriebes, welcher eine Eigenschaft des Windantriebes charakterisiert. Bei einem Antriebsparameter handelt es sich insbesondere um einen Betriebsparameter und/oder einen Leistungsparameter des Windantriebes.

Eine "Leistungseinsparung" eines Windantriebes ist insbesondere diejenige Leistungseinsparung, welche der Windantrieb gegenüber einem alleinigen Antrieb durch einen Schiffsmotor als Hauptantrieb ermöglicht. Die Leistungseinsparung kann beispielsweise als eingesparte Wellenleistung in kW angegeben werden.

Bei einem "Windantrieb" handelt es sich insbesondere um den Antrieb eines Schiffes durch Wind. Ein Windantrieb kann als Haupt- und/oder Zusatzantrieb eines Schiffes verwendet werden. Ein Windantrieb ist insbesondere ein konventionelles Segel, ein Flettner-Rotor, ein Dyna-Rigg-Segel, ein Wingsail-Segel, ein Turbosail-Antrieb und/oder ein frei drehbarer Mast mit einem Segel.

Ein "Schiff" ist insbesondere ein schwimmfähiges Wasserfahrzeug. Bei einem Schiff handelt es sich insbesondere um ein Überwasserfahrzeug mit einem Windantrieb und/oder einem motorischen und/oder elektrischen Antrieb.

Eine "Datenverarbeitungsvorrichtung" ist insbesondere eine Vorrichtung zum organisierten Umgang mit Datenmengen mit dem Ziel, Informationen über diese Datenmenge zu gewinnen und/oder diese Datenmengen zu verändern. Mittels der Datenverarbeitungsvorrichtung werden insbesondere Datensätze erfasst, ausgewertet, verändert, verarbeitet und/oder ausgegeben. Eine Datenverarbeitungsvorrichtung ist insbesondere eine elektronische Maschine und/oder ein Computer. Eine Datenverarbeitungsvorrichtung weist insbesondere eine Speicherprogrammierbare Steuerung, ein Schnittstellen- und Implementationsmodul, wie beispielsweise ein C++-Modul, und/oder eine echtzeitfähige Schnittstelle zu einem oder mehreren zugeordneten Messgeräten eines Schiffes auf. Eine Datenverarbeitungsvorrichtung ist insbesondere ein Industrie-PC und/oder ein Rechnerverbund ("Cluster") aus mehreren Industrie-PCs und/oder mehreren Mikrocontrollern. Eine Datenverarbeitungsvorrichtung kann an Bord eines Schiffes oder dezentral auf dem Wasser oder an Land angeordnet sein.

Eine "Schnittstelle" ist insbesondere eine Verbindungsstelle für einen Datenaustausch zwischen einzelnen Geräten und/oder Vorrichtungen. Eine Schnittstelle ermöglicht insbesondere eine Datenübertragung von auf einem Schiff installierten Sensoren und/oder Instrumenten zu der Datenverarbeitungseinrichtung und/oder der speichprogrammierbaren Steuerung. Der Datenaustausch über die Schnittstelle erfolgt insbesondere gemäß des NMEA- 0183-Standards, des NMEA-2000-Standards und/oder mittels eines anderen Protokolls.

Bei einem "Windparameter" handelt es sich insbesondere um eine Eigenschaft des meteorologischen Windes oder des an einem fahrenden Schiff wahrgenommenen Windes. Ein Windparameter ist insbesondere eine Windrichtung, ein Windwinkel und/oder eine Windgeschwindigkeit. Bei einem fahrenden Schiff handelt es sich bei einem Windparameter insbesondere um eine Eigenschaft des scheinbaren Windes, wie beispielsweise ein scheinbarer Windwinkel und/oder eine scheinbare Windgeschwindigkeit.

Ein "Schiffsparameter" ist insbesondere eine Eigenschaft eines Schiffes. Bei einem Schiffsparameter handelt es sich beispielsweise um einen Kurs des Schiffes und/oder um eine Fahrtgeschwindigkeit des Schiffes.

Ein "Messgerät" (auch "Messinstrument") dient insbesondere zum Bestimmen einer geometrischen und/oder physikalischen Größe. Mit einem Messgerät wird oder werden insbesondere der Windparameter oder mehrere Windparameter und/oder ein Schiffsparameter oder mehrere Schiffsparameter erfasst.

Ein "wahrer Windwinkel" ("True Wind Angle", TWA) ist der Winkel zwischen dem meteorologischen Wind und der Kiellinie des Schiffes.

Eine "wahre Windgeschwindigkeit" ("True Wind Speed", TWS) ist die Windgeschwindigkeit des meteorologischen Windes.

Unter dem "derzeitigen" wahren Windwinkel und der "derzeitigen" wahren Windgeschwindigkeit werden der aktuell vorliegende wahre Windwinkel und die aktuell vorliegende wahre Windgeschwindigkeit verstanden.

Der "scheinbare Windwinkel" ("Apparent Wind Angle", AWA) ist insbesondere der Winkel zwischen dem am fahrenden Schiff gemessenen Wind und der Kiellinie des Schiffes.

Eine "scheinbare Windgeschwindigkeit" ("Apparent Wind Speed", AWS) ist insbesondere die am fahrenden Schiff gemessene Windgeschwindigkeit. Die scheinbare Windgeschwindigkeit kann unter Verwenden der wahren Windgeschwindigkeit und -richtung und der Fahrtgeschwindigkeit des Schiffes sowie des Schiffskurses berechnet werden.

Ein "Leistungsparameter" ist insbesondere ein Parameter, welcher eine Leistung eines Windantriebes charakterisiert. Bei einem Leistungsparameter kann es sich beispielsweise um erzeugte Kräfte in Kielrichtung und orthogonal zur Kielrichtung und/oder um die eingesparte Wellenleistung handeln. Ein Leistungsparameter kann auch aus mehreren Leistungsparametern eines Windantriebes bestimmt werden. Ein optimaler Leistungsparameter und/oder Antriebsparameter kann insbesondere aus einem scheinbaren Windwinkel, einer scheinbaren Windgeschwindigkeit und einem Schiffsparameter für eine maximale Leistungseinsparung berechnet werden.

Ein "Betriebsparameter" ist insbesondere ein Parameter des Windantriebes, welcher einen Betriebszustand des Windantriebes charakterisiert. Bei einem Betriebsparameter kann es sich beispielsweise um die Drehzahl und Drehrichtung eines Flettner-Rotors oder um den Anstellwinkel eines Wingsail-Segels handeln. Ein optimaler Antriebsparameter und/oder optimaler Betriebsparameter kann insbesondere aus dem optimalen Leistungsparameter und der scheinbaren Windgeschwindigkeit bestimmt werden.

Bei einem "Winkelbereich von 0 bis 360 Grad" handelt es sich insbesondere um einen Vollwinkel. Bei Angabe dieses Winkelbereiches in Polarkoordinaten entspricht der Winkel von 0 Grad dem Winkel von 360 Grad.

Unter einem "Kurs" wird insbesondere der dreiziffrige in Grad angegebene in der Horizontalebene gemessene Winkel zwischen einer Bezugsrichtung und der Bewegungs- oder Vorausrichtung eines Schiffes verstanden. Ein "optimaler Kurs" ist insbesondere der Kurs des Schiffes, bei dem der gewünschte Zielpunkt unter maximaler Leistungseinsparung des Schiffes und/oder Verwenden des optimalen Antriebsparameters des Windantriebes erreicht wird.

"In Echtzeit" bedeutet insbesondere, dass ein optimaler Kurs des Schiffes in einer simultan zur Realität ablaufenden Zeit einstellbar und/oder anpassbar ist. Somit läuft das Verfahren zum Bestimmen des optimalen Antriebsparameters und/oder der Leistungseinsparung des Windantriebes nahezu simultan mit den entsprechenden Prozessen in der Realität, insbesondere den sich ändernden Wind- und/oder Schiffsparametern, ab. Eine Verzögerung von einigen Millisekunden oder Sekunden wird vorliegend auch noch als "Echtzeit" verstanden.

In einer weiteren Ausgestaltung des Verfahrens wird oder werden als Messgerät ein Windmesser zum Erfassen des scheinbaren Windwinkels und/oder der scheinbaren Windgeschwindigkeit als Windparameter und/oder ein GPS-Empfänger zum Erfassen eines Kurses über Grund und/oder einer Geschwindigkeit über Grund als Schiffsparameter verwendet.

Dadurch kann das Bestimmen des derzeitigen wahren Windwinkels und der derzeitigen wahren Windgeschwindigkeit direkt aus dem scheinbaren Windwinkel, der scheinbaren Windgeschwindigkeit, des Kurses über Grund und der Geschwindigkeit über Grund erfolgen.

Ein "Windmesser" (auch "Anemometer") ist insbesondere ein Instrument zur lokalen Messung der Geschwindigkeit eines Strömungsfeldes und/oder der Windgeschwindigkeit und/oder der Windrichtung.

Ein "GPS-Empfänger" ist insbesondere ein Empfangsgerät, welches aus Sattelitensignalen die eigene Position bestimmt. Bei Bewegung eines Schiffes bestimmt der GPS-Empfänger insbesondere aus aufeinanderfolgenden, ermittelten Positionen den Kurs und/oder die Geschwindigkeit des Schiffes.

"Kurs über Grund" ("Course over Ground", COG) ist insbesondere der in Relation zum Grund gemessene Kurs der Bewegung des Schiffes. Als Kurs über Grund wird auch der Winkel zwischen rechtsweisend Nord und der wahren Bewegung eines Schiffes über Grund bezeichnet.

"Geschwindigkeit über Grund" ("Speed over Ground", SOG) ist insbesondere die in Relation zum Grund gemessene Geschwindigkeit der Bewegung des Schiffes. Die Geschwindigkeit über Grund stellt somit die Geschwindigkeit des Schiffes bezogen auf die Erdoberfläche dar.

Um ein dynamisches Bestimmen und Anpassen an sich ändernde Wind- und/oder Schiffsbedingungen zu ermöglichen, weist das Verfahren erfindungsgemäß eine Zykluszeit von ≤ 5 Sekunden, insbesondere ≤ 2 Sekunden, bevorzugt ≤ 1 Millisekunde auf, sodass das Bestimmen des optimalen Antriebsparameters und/oder der Leistungseinsparung in Abhängigkeit von sich ändernden Wind- und/oder Schiffsparametern in Echtzeit durchgeführt wird.

Somit können Veränderungen der Betriebsbedingungen und/oder der Umgebungsbedingungen instantan erkannt und in der Steuerung des Schiffes berücksichtigt werden.

Eine "Zykluszeit" ist insbesondere die Zeit, in welcher die Schritte des erfindungsgemäßen Verfahrens von dem Übertragen von erfassten Daten des zugeordneten Messgerätes oder der zugeordneten Messgeräte bis zum Vorliegen des optimalen Antriebsparameters und/oder der maximalen Leistungseinsparung dauert. Nach Ablauf der Zykluszeit werden die Schritte des erfindungsgemäßen Verfahrens ausgehend von aktuellen Daten des Messgerätes oder der Messgeräte wiederholt.

In einer weiteren Ausgestaltung des Verfahrens wird ergänzend als Messgerät ein Kreiselkompass zum Erfassen eines Steuerkurses verwendet, sodass zusätzlich ein Einfluss einer Wasserströmung im Verfahren berücksichtigt wird.

Dies ist vorteilhaft, da sich aufgrund von Störeinflüssen von Wind- und Wasserströmung der Steuerkurs üblicherweise von der Bewegungsrichtung des Schiffes unterscheidet.

Ein "Kreiselkompass" ist insbesondere ein Kompass, welcher sich parallel zur Rotationsachse der Erde orientiert und dadurch die Nord-Süd-Richtung anzeigt.

Um die Genauigkeit beim Bestimmen weiter zu erhöhen oder den Schiffsparameter Geschwindigkeit über Grund zu ersetzen, wird alternativ oder ergänzend als Messgerät ein Log und/oder eine Logge verwendet, sodass eine Fahrt durchs Wasser des Schiffes erfasst wird.

Ein "Log" und/oder eine "Logge" ist insbesondere ein Messgerät zum Bestimmen der Fahrt und/oder der Geschwindigkeit eines Wasserfahrzeuges. Ein Log und/oder eine Logge zeigt insbesondere die im Wasser zurückgelegte Strecke und somit die Fahrt durchs Wasser an.

Eine "Fahrt durchs Wasser" ("Speed Through Water", STW) ist insbesondere die Geschwindigkeit eines Wasserfahrzeugs relativ zur befahrenen Wassermasse. Aus der Fahrt durchs Wasser ergibt sich insbesondere durch Berücksichtigen von Strom (Versatz des Schiffes durch die Strömung des Wassers) und Abdrift (Versatz des Schiffes durch den Einfluss des Windes) die Geschwindigkeit über Grund.

In einer weiteren Ausgestaltung des Verfahrens wird zusätzlich ein Messgerät zum Erfassen eines aktuellen Betriebszustandes des Windantriebes verwendet.

Somit kann der aktuelle Betriebszustand des Windantriebes überwacht und für diesen ebenfalls ein Antriebsparameter und/oder Leistungsparameter bestimmt werden, um eine Abweichung vom Optimalzustand festzustellen. Es ist besonders vorteilhaft bei einem Flettner-Rotor als Windantrieb, einen Drehwinkelgeber als Messgerät zu verwenden, um die Drehzahl und/oder die Drehrichtung des Rotors zu bestimmen.

Um Überreaktionen des Windantriebs auf Windböen durch häufiges Beschleunigen und Abbremsen eines Rotors oder Einstellen eines anderen Windantriebes zu vermeiden, werden die Daten des scheinbaren Windwinkels und/oder der scheinbaren Windgeschwindigkeit durch einen Filter geglättet, bevor der wahre Windwinkel und/oder die wahre Windgeschwindigkeit berechnet wird oder werden, um einen Einfluss durch eine Böigkeit des Windes zu minimieren.

Eine "Böigkeit" oder "Böe" ist insbesondere eine heftige Luftbewegung (Windstoß) von kurzer Dauer. Eine Böigkeit oder Böe ist häufig mit einer Winddrehung verbunden.

Ein "Filter" ist insbesondere ein mathematisches Verfahren, welches aus den Datensätzen die Daten einer Böe herausfiltert und somit aus den Datensätzen entfernt.

In einer weiteren Ausgestaltung des Verfahrens wird oder werden als optimale Antriebsparameter eine Drehzahl, eine Drehrichtung, eine Umfangsgeschwindigkeit und/oder ein Anstellwinkel zum Wind des Windantriebes verwendet.

Es ist besonders vorteilhaft, als optimalen Antriebsparameter und/oder optimalen Betriebsparameter eine Drehzahl und/oder eine Drehrichtung im Falle eines Flettner-Rotors oder einen Anstellwinkel im Falle eines Dyna-Rigg-Segels, eines Wingsail-Segels, eines Turbosail-Antriebes und/oder eines Segels mit frei drehbarem Mast zu verwenden.

In einem weiteren Aspekt der Erfindung wird die Aufgabe gelöst durch ein Verfahren zum Darstellen der zuvor bestimmten Leistungseinsparung eines Windantriebes für eine Kursänderung mittels eines Datenverarbeitungssystems, insbesondere mittels einer speicherprogrammierbaren Steuerung, durch Erzeugen eines Polarkoordinatensystems zum Anzeigen einer jeweiligen maximalen Leistungseinsparung in Abhängigkeit von einem jeweiligen wahren Windwinkel in einem Winkelbereich von 0 bis 360 Grad, sodass ein optimaler Kurs des Schiffes in Echtzeit direkt vorhersagbar und/oder ablesbar ist.

Somit wird eine dynamisch generierte Segelpolare angezeigt, deren Parameter entsprechend der in Echtzeit sensorisch erfassten Daten gewählt werden. Folglich ist es jederzeit möglich, die bei einer Kursänderung und/oder bei einer Windänderung zu erwartende Änderung der Leistung des Windantriebes sofort anzuzeigen, sodass die jeweilige Leistungsänderung des Antriebes in Abhängigkeit von dem wahren Windwinkel für einen Steuermann auf einen Blick erkennbar und ein besserer Kurs ansteuerbar ist.

In einer weiteren Ausgestaltung des Verfahrens zum Darstellen der zuvor bestimmten Leistungseinsparung wird der derzeitige wahre Windwinkel mittels eines Anzeigers beim Darstellen angezeigt, sodass aus einem Schnittpunkt des Anzeigers mit einer Polaren der Leistungseinsparung direkt die derzeitige maximale Leistungseinsparung ablesbar ist.

Dadurch wird die Bedienerfreundlichkeit an Bord weiter erhöht.

Um einen direkten Bezug zu den gemessenen Windparametern scheinbarer Windwinkel und/oder scheinbare Windgeschwindigkeit zu erhalten, erfolgt alternativ oder ergänzend das Erzeugen des Polarkoordinatensystems unter Verwenden des scheinbaren Windwinkels und/oder der scheinbaren Windgeschwindigkeit.

Durch das Verwenden eines scheinbaren Windparameters kann somit ein direkter Abgleich mit den Daten des Messgerätes erfolgen, während bei Verwenden des wahren Windwinkels und/oder der wahren Windgeschwindigkeit ein direkter Abgleich mit üblichen Wetterkarten ermöglicht wird, welche sich stets auf den wahren Wind beziehen.

In einem zusätzlichen Aspekt der Erfindung wird die Aufgabe gelöst durch ein automatisches Steuerungssystem für einen Windantrieb, wobei dem automatischen Steuerungssystem ein Motor zum Einstellen und/oder Antreiben eines Windantriebes zugeordnet ist, wobei das automatische Steuerungssystem derart eingerichtet ist, um ein zuvor beschriebenes Verfahren zum Bestimmen eines optimalen Antriebsparameters und/oder einer Leistungseinsparung und/oder ein zuvor beschriebenes Verfahren zum Darstellen der zuvor bestimmten Leistungseinsparung auszuführen.

Somit kann das automatische Steuerungssystem sowohl zum Überwachen der Daten der Messgeräte, zum Bestimmen eines Antriebsparameters und/oder einer Leistungseinsparung, zum Darstellen der ermittelten Leistungseinsparung in Abhängigkeit des Windwinkels und/oder zum Steuern eines in Echtzeit bestimmten Kurses bevorzugt mit maximaler Leistungseinsparung verwendet werden.

Es ist besonders vorteilhaft, dass das automatische Steuerungssystem auch ein Anzeigeinstrument zur Darstellung der Segelpolare und der Leistungseinsparmöglichkeiten in Abhängigkeit vom Windwinkel und/oder Kurs aufweist.

Ein "Motor" ist insbesondere eine Maschine, welche eine mechanische Arbeit durch Umwandlung von einer Energieform, wie beispielsweise eine thermische, chemische oder elektrische Energie, in Bewegungsenergie verrichtet. Bei einem Motor handelt es sich insbesondere um einen Elektro-, Pneumatik- und/oder Hydraulik- oder Verbrennungsmotor.

In einer weiteren Ausführungsform des automatischen Steuerungssystems für einen Windantrieb ist der Motor durch das automatische Steuerungssystem in Echtzeit ansteuerbar, sodass der bestimmte optimale Antriebsparameter und/oder die maximale Leistungseinsparung für einen Kurs des Schiffes mittels des Motors in Echtzeit einstellbar ist oder sind.

Da mit der Bestimmung der Leistungseinsparung auch immer mindestens ein zugehöriger Antriebsparameter und/oder Betriebsparameter bestimmt wird, kann dieser mittels des Motors direkt am Windantrieb eingestellt werden.

In einem zusätzlichen Aspekt der Erfindung wird die Aufgabe gelöst durch einen Windantrieb, wobei der Windantrieb derart eingerichtet ist, um ein zuvor beschriebenes Verfahren zum Bestimmen eines optimalen Antriebsparameters und/oder einer Leistungseinsparung und/oder ein zuvor beschriebenes Verfahren zum Darstellen der zuvor bestimmten Leistungseinsparung auszuführen.

Somit kann je nach Art des Windantriebs für jeden Windantrieb ein entsprechender optimaler Antriebsparameter und/oder eine Leistungseinsparung bestimmt, dargestellt und diese für einen optimalen Betrieb des Windantriebs genutzt werden.

In einem zusätzlichen Aspekt der Erfindung wird die Aufgabe gelöst durch ein Schiff, welches ein zuvor beschriebenes automatisches Steuerungssystem und/oder einen zuvor beschriebenen Windantrieb aufweist.

Somit kann der Betrieb eines Schiffes mit Windantrieb erfasst, bestimmt, dargestellt und unter optimaler Betriebseinstellung des Windantriebes ein optimaler, leistungseinsparender Kurs verwendet werden.

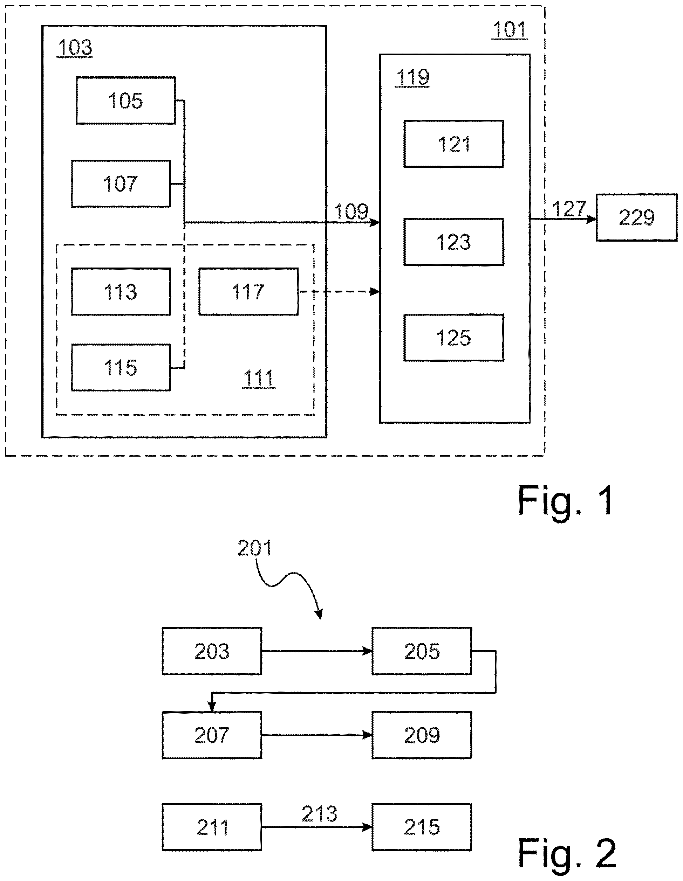

Im Weiteren wird die Erfindung anhand von Ausführungsbeispielen näher erläutert. Es zeigen
- Figur 1: eine schematische Darstellung eines Berechnungs- und Visualisierungssystems,
- Figur 2: eine schematische Darstellung von Berechnungsschritten, und

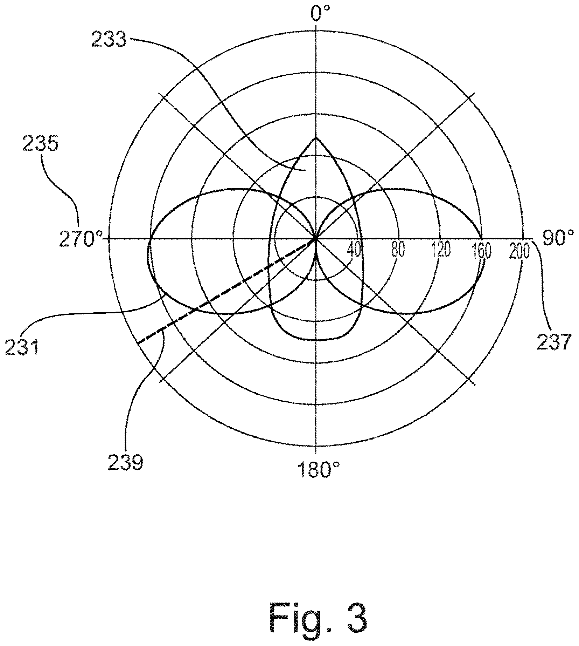

- Figur 3: eine Polardarstellung einer eingesparten Wellenleistung eines Flettner-Rotors.

Ein nicht gezeigtes Rotorschiff mit einem Flettner-Rotor 229 weist ein Berechnungs- und Visualisierungssystem 101 auf. Das Berechnungs- und Visualisierungssystem 101 umfasst Sensoren 103 und einen nicht gezeigten Industrie-PC mit einer speicherprogrammierbaren Steuerung 119. Als Sensoren 103 werden ein GPS-Empfänger 105 zum Erfassen eines Kurses über Grund (COG) und einer Geschwindigkeit über Grund (SOG) und ein Anemometer 107 zum Erfassen eines scheinbaren Windwinkels (AWA) und einer scheinbaren Windgeschwindigkeit (AWS) eingesetzt.

Des Weiteren sind als optional verwendbare Sensoren 111 zusätzlich ein Kreiselkompass 113 zum Erfassen eines Steuerkurses (HDG) und eine Logge 115 zum Erfassen einer Geschwindigkeit durchs Wasser (STW) des Rotorschiffes sowie ein Drehwinkelgeber 117 zum Erfassen eines Betriebszustandes des Rotors vorhanden.

Kontinuierlich aufgenommene Daten des GPS-Empfängers 105 und des Anemometers 107 werden über eine nicht gezeigte echtzeitfähige Schnittstelle als NMEA-0183-Datensätze 109 an die speicherprogrammierbare Steuerung 119 übertragen. In der speicherprogrammierbaren Steuerung 119 erfolgt im Schritt 121 ein Verarbeiten der NMEA-0183-Datensätze 109, wobei diese derart ausgewertet werden, dass die für die Berechnung benötigten Sensorwerte aus NMEA-0183-Datensätzen 109 extrahiert werden. An die speicherprogrammierbare Steuerung 119 ist ein mit Ein- und Ausgängen verknüpftes C++-Modul 123 angebunden, welches einer Bestimmung einer optimalen Drehzahl und Drehrichtung 127 als Betriebsparameter des Flettner-Rotors 229, einem Erzeugen von Koordinatenpunkten für eine Visualisierung 125 sowie einem Bestimmen eines derzeitigen Energieeinsparpotentials dient.

Mittels des C++-Moduls 123 werden folgende Berechnungsschritte 201 innerhalb von einer Millisekunde durchgeführt:

Zum Erfassen der derzeitig herrschenden tatsächlichen Windbedingungen werden die erfassten Daten 203 zu AWA, AWS, COG und SOG (sowie optional zu HDG, STW) zum Berechnen 205 eines wahren Windwinkels (TWA) und einer wahren Windgeschwindigkeit (TWS) verwendet. Der bestimmte wahre Windwinkel beträgt 240 Grad und die bestimmte wahre Windgeschwindigkeit 13,75 m/s.

Simultan werden die erfassten Daten 211 zu AWA und AWS einer Windglättung 213 mittels eines nicht gezeigten Filters unterzogen, um von einer Böigkeit des Windes beeinflusste Daten herauszufiltern und somit starke Schwankungen der ermittelten Parameter in einem kurzen Zeitabschnitt zu vermeiden. Nach der Windglättung 213 werden die Daten 211 zu AWA, AWS und SOG zum Berechnen 215 von Leistungsparametern des Flettner-Rotors 229 verwendet. Hierbei werden die folgenden Leistungsparameter des Flettner-Rotors 229 ermittelt:
- Widerstands- und Auftriebskoeffizienten (cₗ, c_{d})
- Erzeugte Kräfte in Kielrichtung und orthogonal zur Kielrichtung (Fₓ, F_{y})
- Eine diesen Kräften entsprechende effektive Vorschubleistung (Pₜₕᵣᵤₛₜ)
- Eine über einen Propellerwirkungsgrad dieser Vorschubleistung entsprechende Wellenleistung des Rotorschiffes (P_{shaft})
- Eine von einem den Flettner-Rotor 229 antreibenden Elektromotor aufgenommene Leistung (P_{motorused})
- Eine nach Abzug der für den Motor aufgewendeten Energie gesparte Wellenleistung (P_{shaftsaved}).

Diese Leistungsparameter sind abhängig von einer Schnelllaufzahl λ, welche ein Verhältnis von einer Umfanggeschwindigkeit des Flettner-Rotors 229 zur Anströmgeschwindigkeit ist. Mittels eines Algorithmus wird ein Optimum für die Schnelllaufzahl λ berechnet, welches bei einer Schnelllaufzahl von 3,4 liegt und bei welchem die gesparte Wellenleistung (P_{shaftsaved}) maximal wird. Aus der optimierten Schnelllaufzahl λ wird unter Verwenden der scheinbaren Windgeschwindigkeit (AWS) im Schritt 215 die optimale Drehrichtung des Flettner-Rotors 229 und die optimale Umfangsgeschwindigkeit des Flettner-Rotors 229 bestimmt, wobei sich aus der optimalen Umfangsgeschwindigkeit direkt die optimale Drehzahl des Flettner-Rotors 229 ergibt. Diese optimalen Betriebsparameter werden als Ausgänge des C++-Moduls 123 zurück an die speicherprogrammierbare Steuerung 119 übertragen.

Die im Schritt 205 berechnete wahre Windgeschwindigkeit (TWS) wird in der Visualisierung 125 zur Darstellung eines Einsparpotentials, angegeben als eine gesparte Wellenleistung, verwendet. Dazu erfolgt im Schritt 207 zunächst ein Variieren des wahren Windwinkels (TWA) in einem Bereich von 0 bis 359 Grad, welches einer möglichen Veränderung bei einem Anpassen des Kurses des Rotorschiffes entspricht. Dabei werden wahre Windwinkel mit einem Delta von 1 Grad festgelegt. Darauf erfolgt weiterhin im Schritt 207 ein Bestimmen des scheinbaren Windwinkels (AWA) und der scheinbaren Windgeschwindigkeit (AWS) für jeden festgelegten wahren Windwinkel in dem Winkelbereich von 0 bis 359 Grad unter Verwenden der bestimmten derzeitigen wahren Windgeschwindigkeit (TWS). Anschließend wird ein Berechnen 209 der gesparten Wellenleistung für jeden festgelegten wahren Windwinkel im Winkelbereich von 0 bis 359 Grad entsprechend der oben beschriebenen Optimierung durchgeführt. Als Ergebnis wird die jeweils bestimmte eingesparte Wellenleistung für jeden festgelegten wahren Windwinkel vom C++-Modul 123 ebenfalls als Ausgang zurück an die speicherprogrammierbare Steuerung 119 übertragen.

In der Visualisierung 125 wird die jeweils gesparte Wellenleistung in Abhängigkeit von jedem festgelegten wahren Windwinkel (TWA) in einem Polarkoordinatensystem innerhalb von 200 Millisekunden dargestellt. Das Polarkoordinatensystem ist innerhalb eines quadratischen Visualisierungselementes festgelegt mit:
- Pol zentriert in der Mitte des quadratischen Visualisierungselementes,
- Polachse vertikal nach oben gerichtet, und
- Polwinkel gemessen im mathematisch negativen Drehsinn.

Im Hintergrund ist eine stilisierte Darstellung des Rotorschiffrumpfes 233 mit seinem Bug in 0-Grad-Richtung und eine variable Skalierung aus mehreren konzentrischen, äquidistant angeordneten Ringen dargestellt. Die Skalierung wird dynamisch anhand der berechneten maximalen eingesparten Wellenleistungen festgelegt. Für jede Skalierung besteht eine festgelegte Entsprechung von einer Längeneinheit einer Radialkoordinate des Polarkoordinatensystems zu einer gesparten Wellenleistung in kW. Ein Anzeigen der gesparten Wellenleistung erfolgt als Segelpolare 231, welche aus den 360 errechneten Werten der eingesparten Wellenleistung für die jeweils festgelegten wahren Windwinkel (TWA) 235 erzeugt wird. Hierzu werden zur Darstellung in einer Benutzeroberfläche die errechneten Polarkoordinaten (Polarwinkel gegeben durch wahre Windwinkel, Radialkoordinate entsprechend der bei dem jeweiligen wahren Windwinkel möglichen gesparten Wellenleistung) in ein kartesisches Koordinatensystem (mit positiver x-Achse in Richtung von 90 Grad, positiver y-Achse in Richtung von 180 Grad) transformiert. Diese Berechnung von Koordinatenpunkten erfolgt direkt in der speicherprogrammierbaren Steuerung 119, welche die Segelpolare 231 als Polygon durch die errechneten Punkte visualisiert.

Zusätzlich wird in der Visualisierung 125 ein aktueller TWA-Anzeiger 239 dargestellt, wobei aus einem Schnittpunkt des aktuellen TWA-Anzeigers 239 mit der Segelpolare 231 direkt die aktuelle gesparte Wellenleistung abzulesen ist, welche 135 kW bei dem aktuellen TWA von 240 Grad beträgt.

Aufgrund einer Winddrehung wird mit dem Berechnungs- und Visualisierungssystem 101 in Echtzeit ein neuer aktueller TWA von 270 Grad und eine maximal gesparte Wellenleistung von 160 kW bestimmt. Die zu dieser maximalen eingesparten Wellenleistung berechnete optimale Drehzahl und Drehrichtung 127 werden von der speicherprogrammierbaren Steuerung 119 an einen nicht gezeigten Elektromotor zum Einstellen des neuen Betriebszustandes des Flettner-Rotors 123 in Echtzeit übertragen. Somit erfolgt durch die automatische Steuerung eine sehr schnelle Anpassung an die geänderte Windbedingung unter Einstellen der optimalen Betriebsparameter des Flettner-Rotors 229 und maximaler Energieeinsparung. Zudem ist aus der Segelpolare 231 direkt ablesbar, dass durch eine Kursänderung um 10 Grad und somit einem neuen TWA von 260 Grad ein weiteres erhöhtes Einsparpotential nutzbar ist.

### Bezugszeichenliste

- 101: Berechnungs- und Visualisierungssystem
- 103: Sensoren
- 105: GPS-Empfänger zum Erfassen von COG und SOG
- 107: Anemometer zum Erfassen von AWA und AWS
- 109: NMEA-0183-Datensätze
- 111: Optional verwendbare Sensoren
- 113: Kreiselkompass zum Erfassen von HDG
- 115: Logge zum Erfassen von STW
- 117: Drehwinkelgeber
- 119: Speicherprogrammierbare Steuerung
- 121: Verarbeiten der NMEA-0183-Datensätze
- 123: C++-Modul
- 125: Visualisierung
- 127: Optimale Drehzahl und Drehrichtung
- 201: Berechnungsschritte
- 203: erfasste Daten zu AWA, AWS, COG, SOG, (HDG, STW)
- 205: Berechnen von TWA und TWS
- 207: Variieren von TWA 0 - TWA 359 Grad, Verwenden von TWS zum Berechnen von AWA und AWS
- 209: Berechnen der gesparten Wellenleistung bei TWA 0 - TWA 359 Grad
- 211: erfasste Daten zu AWA, AWS, SOG
- 213: Windglättung
- 215: Berechnen des Leistungsparameters des Flettner-Rotors bei optimaler Drehzahl und -richtung
- 229: Flettner-Rotor
- 231: Segelpolare
- 233: Rotorschiffsrumpf
- 235: TWA
- 237: eingesparte Wellenleistung in kW
- 239: aktueller TWA-Anzeiger

## Patentansprüche

1. Verfahren zum Bestimmen eines optimalen Antriebsparameters und einer maximalen Leistungseinsparung eines Windantriebes eines Schiffes mittels einer Datenverarbeitungsvorrichtung (119, 123) mit einer echtzeitfähigen Schnittstelle zu mindestens einem zugeordneten Messgerät (103, 105, 107, 111, 113, 115) des Schiffes, wobei mittels des Messgerätes oder der Messgeräte ein Windparameter oder mehrere Windparameter und ein Schiffsparameter oder mehrere Schiffsparameter erfasst werden, mit folgenden Schritten:
- Übertragen von an Bord erfassten Daten des zugeordneten Messgerätes oder der zugeordneten Messgeräte über die echtzeitfähige Schnittstelle zu der Datenverarbeitungsvorrichtung,
- Bestimmen des optimalen Antriebsparameters und der maximalen Leistungseinsparung des Windantriebes mittels der Datenverarbeitungsvorrichtung aus den übertragenen Daten durch
o Bestimmen eines derzeitigen wahren Windwinkels und einer derzeitigen wahren Windgeschwindigkeit, wobei der derzeitige wahre Windwinkel ein aktuell vorliegender wahrer Windwinkel und der wahre Windwinkel ein Winkel zwischen einem meteorologischen Wind und einer Kiellinie des Schiffes ist und wobei die derzeitige wahre Windgeschwindigkeit eine aktuell vorliegende wahre Windgeschwindigkeit und die wahre Windgeschwindigkeit eine Windgeschwindigkeit des meteorologischen Windes ist,
o Bestimmen des optimalen Antriebsparameters, wobei der Antriebsparameter ein Betriebsparameter und/oder ein Leistungsparameter des Windantriebes ist, für eine maximale Leistungseinsparung unter Verwenden eines scheinbaren Windwinkels, einer scheinbaren Windgeschwindigkeit und des Schiffsparameters oder mehrerer Schiffsparameter,
o Festlegen von wahren Windwinkeln in einem Winkelbereich von 0 bis 360 Grad,
o Bestimmen des scheinbaren Windwinkels und/oder der scheinbaren Windgeschwindigkeit für jeden festgelegten wahren Windwinkel in dem Winkelbereich von 0 bis 360 Grad unter Verwenden der bestimmten derzeitigen wahren Windgeschwindigkeit, und
o Bestimmen des optimalen Antriebsparameters und der maximalen Leistungseinsparung für jeden festgelegten wahren Windwinkel wie zuvor beschrieben in dem Winkelbereich von 0 bis 360 Grad,
sodass der optimale Antriebsparameter und die maximale Leistungseinsparung für jeden festgelegten wahren Windwinkel vorliegen, anhand deren ein optimaler Kurs des Schiffes in Echtzeit einstellbar ist, wobei das Verfahren eine Zykluszeit von kleiner gleich 5 Sekunden aufweist, sodass das Bestimmen des optimalen Antriebsparameters und der maximalen Leistungseinsparung dynamisch in Abhängigkeit von sich ändernden Wind- und/oder Schiffsparametern in Echtzeit durchgeführt wird.

2. Verfahren nach Anspruch 1, **dadurch gekennzeichnet, dass** als Messgerät ein Windmesser (107) zum Erfassen des scheinbaren Windwinkels und/oder der scheinbaren Windgeschwindigkeit als Windparameter und/oder ein GPS-Empfänger (105) zum Erfassen eines Kurses über Grund und/oder einer Geschwindigkeit über Grund als Schiffsparameter verwendet wird oder werden.

3. Verfahren nach einem der vorherigen Ansprüche, **dadurch gekennzeichnet, dass** das Verfahren die Zykluszeit von kleiner gleich 2 Sekunden, bevorzugt kleiner gleich 1 Millisekunde aufweist, sodass das Bestimmen des optimalen Antriebsparameters und der maximalen Leistungseinsparung in Abhängigkeit von sich ändernden Wind- und Schiffsparametern in Echtzeit durchgeführt wird.

4. Verfahren nach einem der vorherigen Ansprüche, **dadurch gekennzeichnet, dass** ergänzend als Messgerät ein Kreiselkompass (113) zum Erfassen eines Steuerkurses verwendet wird, sodass zusätzlich ein Einfluss einer Wasserströmung im Verfahren berücksichtigt wird.

5. Verfahren nach einem der vorherigen Ansprüche, **dadurch gekennzeichnet, dass** alternativ oder ergänzend als Messgerät ein Log und/oder eine Logge (115) verwendet wird, sodass eine Fahrt durchs Wasser des Schiffes erfasst wird.

6. Verfahren nach einem der vorherigen Ansprüche, **dadurch gekennzeichnet, dass** zusätzlich ein Messgerät (117) zum Erfassen eines aktuellen Betriebszustandes des Windantriebes verwendet wird.

7. Verfahren nach einem der Ansprüche 2 bis 6, **dadurch gekennzeichnet, dass** Daten des scheinbaren Windwinkels und/oder der scheinbaren Windgeschwindigkeit durch einen Filter geglättet werden, bevor der wahre Windwinkel und/oder die wahre Windgeschwindigkeit berechnet wird oder werden, um einen Einfluss durch eine Böigkeit des Windes zu minimieren.

8. Verfahren nach einem der vorherigen Ansprüche, **dadurch gekennzeichnet, dass** als optimaler Antriebsparameter eine Drehzahl, eine Drehrichtung, eine Umfangsgeschwindigkeit und/oder ein Anstellwinkel zum Wind des Windantriebes verwendet wird oder werden.

9. Verfahren zum Darstellen der zuvor bestimmten Leistungseinsparung eines Windantriebes für eine Kursänderung mittels eines Datenverarbeitungssystems, insbesondere mittels einer Speicherprogrammierbaren Steuerung, durch Erzeugen eines Polarkoordinatensystems zum Anzeigen einer jeweiligen maximalen Leistungseinsparung in Abhängigkeit von einem jeweiligen wahren Windwinkel in einem Winkelbereich von 0 bis 360 Grad, sodass ein optimaler Kurs des Schiffes in Echtzeit direkt vorhersagbar und/oder ablesbar ist.

10. Verfahren nach Anspruch 9, **dadurch gekennzeichnet, dass** der derzeitige wahre Windwinkel mittels eines Anzeigers (239) beim Darstellen angezeigt wird, sodass aus einem Schnittpunkt des Anzeigers mit einer Polaren der Leistungseinsparung direkt die derzeitige maximale Leistungseinsparung ablesbar ist.

11. Verfahren nach Anspruch 9 oder 10, **dadurch gekennzeichnet, dass** alternativ oder ergänzend das Erzeugen des Polarkoordinatensystems unter Verwenden des scheinbaren Windwinkels und/oder der scheinbaren Windgeschwindigkeit erfolgt.

12. Automatisches Steuerungssystem für einen Windantrieb, wobei dem automatischen Steuerungssystem ein Motor zum Einstellen und/oder Antreiben eines Windantriebes zugeordnet ist, **dadurch gekennzeichnet, dass** das automatische Steuerungssystem derart eingerichtet ist, um ein Verfahren zum Bestimmen eines optimalen Antriebsparameters und einer maximalen Leistungseinsparung nach einem der Ansprüche 1 bis 8 und/oder ein Verfahren zum Darstellen der zuvor bestimmten Leistungseinsparung nach einem der Ansprüche 9 bis 11 auszuführen.

13. Automatisches Steuerungssystem für einen Windantrieb nach Anspruch 12, **dadurch gekennzeichnet, dass** der Motor durch das automatische Steuerungssystems in Echtzeit ansteuerbar ist, sodass der bestimmte optimale Antriebsparameter und/oder die maximale Leistungseinsparung für einen Kurs des Schiffes mittels des Motors in Echtzeit einstellbar ist oder sind.

14. Windantrieb, wobei dem Windantrieb eine Datenverarbeitungsvorrichtung (119, 123) zugeordnet ist, **dadurch gekennzeichnet, dass** der Windantrieb derart eingerichtet ist, um ein Verfahren zum Bestimmen eines optimalen Antriebsparameters und einer maximalen Leistungseinsparung nach einem der Ansprüche 1 bis 8 und/oder ein Verfahren zum Darstellen der zuvor bestimmten Leistungseinsparung nach einem der Ansprüche 9 bis 11 mittels der Datenverarbeitungsvorrichtung (119, 123) auszuführen.

15. Schiff, **gekennzeichnet durch** ein automatisches Steuerungssystem nach einem der Ansprüche 12 oder 13 und/oder einen Windantrieb nach Anspruch 14.

## Claims

1. Method for determining an optimum propulsion parameter and a maximum power saving of a wind propulsion system of a ship by means of a data-processing device (119, 123) comprising a real-time-capable interface to at least one associated measuring apparatus (103, 105, 107, 111, 113, 115) of the ship, wherein a wind parameter or a plurality of wind parameters and a ship parameter or a plurality of ship parameters are captured by means of the measuring apparatus or measuring apparatuses, comprising the following steps:
- transmitting data captured on board from the associated measuring apparatus or the associated measuring apparatuses via the real-time-capable interface to the data-processing device,
- determining the optimum propulsion parameter and the maximum power saving of the wind propulsion system by means of the data-processing device from the transmitted data by
o determining a current true wind angle and a current true wind speed, wherein the current true wind angle is a currently present true wind angle and the true wind angle is an angle between a meteorological wind and a keel line of the ship, and wherein the current true wind speed is a currently present true wind speed and the true wind speed is a wind speed of the meteorological wind,
o determining the optimum propulsion parameter, wherein the propulsion parameter is an operating parameter and/or a power parameter of the wind propulsion system, for a maximum power saving using an apparent wind angle, an apparent wind speed and the ship parameter or a plurality of ship parameters,
o defining true wind angles in an angular range of from 0 to 360 degrees,
o determining the apparent wind angle and/or the apparent wind speed for each defined true wind angle in the angular range of from 0 to 360 degrees using the determined current true wind speed, and
o determining the optimum propulsion parameter and the maximum power saving for each defined true wind angle as previously described in the angular range of from 0 to 360 degrees,
such that the optimum propulsion parameter and the maximum power saving for each defined true wind angle are provided, on the basis of which an optimum course of the ship can be set in real time, wherein the method has a cycle time of less than or equal to 5 seconds, such that determining the optimum propulsion parameter and the maximum power saving is carried out dynamically in real time on the basis of changing wind and/or ship parameters.

2. Method according to claim 1, **characterised in that,** as the measuring apparatus, an anemometer (107) is used for capturing the apparent wind angle and/or the apparent wind speed as a wind parameter and/or a GPS receiver (105) is used for capturing a ground course and/or a ground speed as a ship parameter.

3. Method according to any of the preceding claims, **characterised in that** the method has a cycle time of less than or equal to 2 seconds, preferably less than or equal to 1 millisecond, such that determining the optimum propulsion parameter and the maximum power saving is carried out in real time on the basis of changing wind and ship parameters.

4. Method according to any of the preceding claims, **characterised in that** a gyrocompass (113) for capturing a heading is additionally used as the measuring apparatus, such that an influence of a water flow can additionally be taken into account in the method.

5. Method according to any of the preceding claims, **characterised in that** a log (115) is alternatively or additionally used as the measuring apparatus, such that a journey of the ship through water is captured.

6. Method according to any of the preceding claims, **characterised in that** a measuring apparatus (117) for capturing a current operating state of the wind propulsion system is additionally used.

7. Method according to any of claims 2 to 6, **characterised in that** data for the apparent wind angle and/or the apparent wind speed is smoothed by a filter before the true wind angle and/or the true wind speed are calculated in order to minimise an influence from wind gusts.

8. Method according to any of the preceding claims, **characterised in that** a rotational speed, a rotational direction, a circumferential speed and/or an angle of attack relative to the wind of the wind propulsion system are used as an optimum propulsion parameter.

9. Method for representing the previously determined power saving of a wind propulsion system for a change in course by means of a data-processing system, in particular by means of a programmable controller, by generating a polar coordinate system for indicating a relevant maximum power saving on the basis of a relevant true wind angle in an angular range of from 0 to 360 degrees, such that an optimum course of the ship can be directly predicted and/or read out in real time.

10. Method according to claim 9, **characterised in that** the current true wind angle is indicated by means of an indicator (239) during the representation, such that the current maximum power saving can be directly read out from a point of intersection of the indicator with a polar of the power saving.

11. Method according to claim 9 or 10, **characterised in that** the polar coordinate system is alternatively or additionally generated using the apparent wind angle and/or the apparent wind speed.

12. Automatic control system for a wind propulsion system, wherein a motor for setting and/or propelling a wind propulsion system is associated with the automatic control system, **characterised in that** the automatic control system is configured to perform a method for determining an optimum propulsion parameter and a maximum power saving according to any of claims 1 to 8 and/or a method for representing the previously determined power saving according to any of claims 9 to 11.

13. Automatic control system for a wind propulsion system according to claim 12, **characterised in that** the motor can be actuated by the automatic control system in real time, such that the determined optimum propulsion parameter and/or the maximum power saving for a course of the ship can be set in real time by means of the motor.

14. Wind propulsion system, wherein a data-processing device (119, 123) is associated with the wind propulsion system, **characterised in that** the wind propulsion system is configured to perform a method for determining an optimum propulsion parameter and a maximum power saving according to any of claims 1 to 8 and/or a method for representing the previously determined power saving according to any of claims 9 to 11 by means of the data-processing device (119, 123).

15. Ship, **characterised by** an automatic control system according to any of claims 12 or 13 and/or a wind propulsion system according to claim 14.

## Revendications

1. Procédé de détermination d'un paramètre d'entraînement optimal et d'une économie de puissance maximale d'une propulsion éolienne d'un navire au moyen d'un dispositif de traitement de données (119, 123) doté d'une interface apte à fonctionner en temps réel avec au moins un appareil de mesure (103, 105, 107, 111, 113, 115) associé du navire, un paramètre de vent ou plusieurs paramètres de vent et un paramètre de navire ou plusieurs paramètres de navire étant détectés au moyen de l'appareil de mesure ou des appareils de mesure, comportant les étapes suivantes :
- transmission de données acquises à bord, provenant de l'appareil de mesure associé ou des appareils de mesure associés, par le biais de l'interface apte à fonctionner en temps réel, au dispositif de traitement de données,
- détermination du paramètre d'entraînement optimal et de l'économie de puissance maximale de la propulsion éolienne au moyen du dispositif de traitement de données à partir des données transmises par
o détermination d'un angle actuel de vent réel et d'une vitesse actuelle de vent réel, l'angle actuel de vent réel étant un angle actuellement présent du vent réel et l'angle de vent réel étant un angle entre un vent météorologique et une ligne de quille du navire et la vitesse actuelle de vent réel étant une vitesse actuellement présente du vent réel et la vitesse de vent réel étant une vitesse de vent du vent météorologique,
o détermination du paramètre d'entraînement optimal, le paramètre d'entraînement étant un paramètre de fonctionnement et/ou un paramètre de puissance de la propulsion éolienne, pour une économie de puissance maximale en utilisant un angle de vent apparent, une vitesse de vent apparent et le paramètre de navire ou les plusieurs paramètres de navire,
o définition d'angles de vent réel dans une plage angulaire de 0 à 360 degrés,
o détermination de l'angle de vent apparent et/ou de la vitesse de vent apparent pour chaque angle de vent réel défini dans la plage angulaire de 0 à 360 degrés en utilisant la vitesse actuelle de vent réel déterminée, et
o détermination du paramètre d'entraînement optimal et de l'économie de puissance maximale pour chaque angle de vent réel défini tel que décrit précédemment dans la plage angulaire de 0 à 360 degrés,
de telle sorte que l'on a le paramètre d'entraînement optimal et l'économie de puissance maximale pour chaque angle de vent réel défini, à l'aide desquels une route optimale du navire peut être réglée en temps réel, le procédé présentant un temps de cycle inférieur ou égal à 5 secondes, de telle sorte que la détermination du paramètre d'entraînement optimal et de l'économie de puissance maximale est effectuée de manière dynamique en temps réel en fonction de paramètres de vent et/ou de navire se modifiant.

2. Procédé selon la revendication 1, **caractérisé en ce que** un anémomètre (107) destiné à la détection de l'angle de vent apparent et/ou de la vitesse de vent apparent comme paramètre de vent et/ou un récepteur GPS (105) destiné à la détection d'une route sur le fond et/ou d'une vitesse sur le fond comme paramètre de navire est ou sont utilisés en guise d'appareil de mesure.

3. Procédé selon l'une des revendications précédentes, **caractérisé en ce que** le procédé présente le temps de cycle inférieur ou égal à 2 secondes, de préférence inférieur ou égal à 1 milliseconde, de telle sorte que la détermination du paramètre d'entraînement optimal et de l'économie de puissance maximale est effectuée en temps réel en fonction de paramètres de vent et/ou de navire se modifiant.

4. Procédé selon l'une des revendications précédentes, **caractérisé en ce que** un compas gyroscopique (113) destiné à la détection d'un cap vrai est utilisé de manière complémentaire en guise d'appareil de mesure, de telle sorte qu'une influence d'un courant d'eau est prise en compte en plus dans le procédé.

5. Procédé selon l'une des revendications précédentes, **caractérisé en ce que** un loch (115) est utilisé en variante ou en complément en guise d'appareil de mesure, de telle sorte qu'une vitesse surface du navire est détectée.

6. Procédé selon l'une des revendications précédentes, **caractérisé en ce que** un appareil de mesure (117) destiné à la détection d'un état de fonctionnement actuel de la propulsion éolienne est utilisé en supplément.

7. Procédé selon l'une des revendications 2 à 6, **caractérisé en ce que** des données de l'angle de vent apparent et/ou de la vitesse de vent apparent sont lissées par un filtre, avant que l'angle de vent réel et/ou la vitesse de vent réel ne soit calculé(e) ou ne soient calculés, pour réduire une influence d'un phénomène de rafales du vent.

8. Procédé selon l'une des revendications précédentes, **caractérisé en ce que** une vitesse de rotation, un sens de rotation, une vitesse périphérique et/ou un angle d'incidence par rapport au vent de la propulsion éolienne est ou sont utilisés comme paramètre d'entraînement optimal.

9. Procédé de représentation de l'économie de puissance préalablement déterminée d'une propulsion éolienne pour un changement de route au moyen d'un système de traitement de données, en particulier au moyen d'un automate programmable, par génération d'un système de coordonnées polaires destiné à l'affichage d'une économie de puissance maximale respective en fonction d'un angle de vent réel respectif dans une plage angulaire de 0 à 360 degrés, de telle sorte qu'une route optimale du navire peut être prévue et/ou consultée directement en temps réel.

10. Procédé selon la revendication 9, **caractérisé en ce que** lors de la représentation, l'angle actuel de vent réel est affiché au moyen d'un indicateur (239), de telle sorte que l'économie de puissance maximale actuelle peut être consultée directement à partir d'un point d'intersection de l'indicateur avec une polaire de l'économie de puissance.

11. Procédé selon la revendication 9 ou 10, **caractérisé en ce que** en variante ou en complément, la génération du système de coordonnées polaires est effectuée en utilisant l'angle de vent apparent et/ou la vitesse de vent apparent.

12. Système de commande automatique pour une propulsion éolienne, dans lequel un moteur destiné au réglage et/ou à l'entraînement d'une propulsion éolienne est associé au système de commande automatique, **caractérisé en ce que** le système de commande automatique est configuré de manière à exécuter un procédé de détermination d'un paramètre d'entraînement optimal et d'une économie de puissance maximale selon l'une des revendications 1 à 8 et/ou un procédé de représentation de l'économie de puissance préalablement déterminée selon l'une des revendications 9 à 11.

13. Système de commande automatique pour une propulsion éolienne selon la revendication 12, **caractérisé en ce que** le moteur peut être commandé en temps réel par le système de commande automatique, de telle sorte que le paramètre d'entraînement optimal déterminé et/ou l'économie de puissance maximale peut ou peuvent être réglés en temps réel au moyen du moteur pour une route du navire.

14. Propulsion éolienne, un dispositif de traitement de données (119, 123) étant associé à la propulsion éolienne, **caractérisée en ce que** la propulsion éolienne est configurée de manière à exécuter un procédé de détermination d'un paramètre d'entraînement optimal et d'une économie de puissance maximale selon l'une des revendications 1 à 8 et/ou un procédé de représentation de l'économie de puissance préalablement déterminée selon l'une des revendications 9 à 11 au moyen du dispositif de traitement de données (119, 123).

15. Navire, **caractérisé par** un système de commande automatique selon l'une des revendications 12 ou 13 et/ou une propulsion éolienne selon la revendication 14.
